# EUROPEAN PATENT APPLICATION

(11) **EP 2 203 036 A1**
(43) Date of publication of application: **30.06.2010**
(21) Application number: 08843909.6
(22) Date of filing: 27.10.2008
(51) Int. Cl.: H05K 7/00, H01B 7/00, H01B 7/08, H01B 11/20

(54) **CABLE WIRING STRUCTURE OF SLIDE-TYPE ELECTRONIC DEVICE AND HARNESS FOR ELECTRONIC DEVICE WIRING**

(30) Priority: 30.10.2007 JP 2007281708
(71) Applicant: Fujikura, Ltd., Tokyo 135-8512 (JP)
(72) Inventor: TANAKA, Yuuki, Sakura-shi Chiba 285-8550 (JP)
(74) Representative: Cabinet Plasseraud
(86) International application number: PCT/JP2008/069434
(87) International publication number: WO 2009/057546

(57) **Abstract**

A cable wiring structure of a sliding-type electronic apparatus is provided which includes a plurality of casings with circuits attached to be movable relatively to each other wherein the circuits within the casings are electrically connected to each other by an electronic apparatus wiring harness. The electronic apparatus wiring harness has a cable laminated portion in which a plurality of micro two-core parallel coaxial cables are laminated, and the cable laminated portion is wired in a U shape when viewed from slide surfaces of the casings.

## Description

### BACKGROUND OF THE INVENTION

### Field of the Invention

Apparatuses consistent with exemplary embodiments of the present invention relate to a cable wiring structure of a sliding-type electronic apparatus, and an electronic apparatus wiring harness.
The priority is claimed on Japanese Patent Application No. 2007-281708, filed on October 30, 2007, the content of which is incorporated herein by reference.

### Background Art

In an electronic apparatus with two or more casings connected to each other, a flexible printed circuit (hereinafter, referred to as an FPC) is generally used for wiring between the casings.

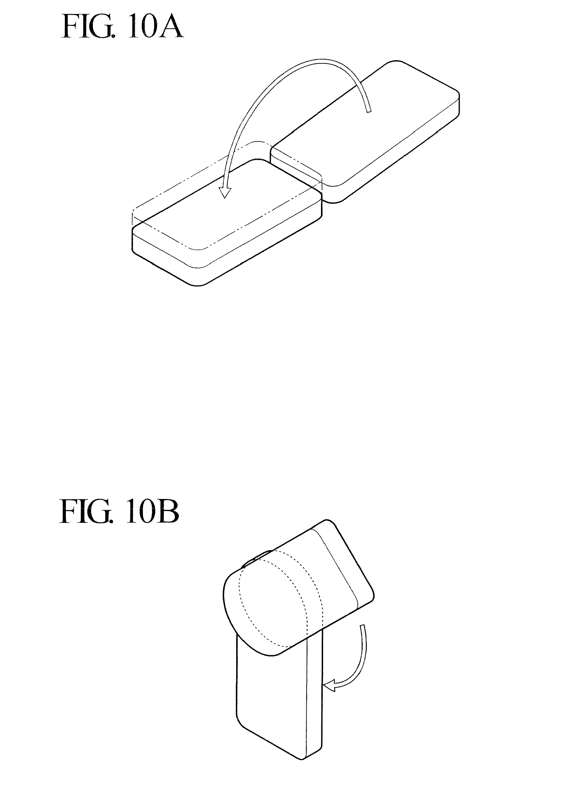

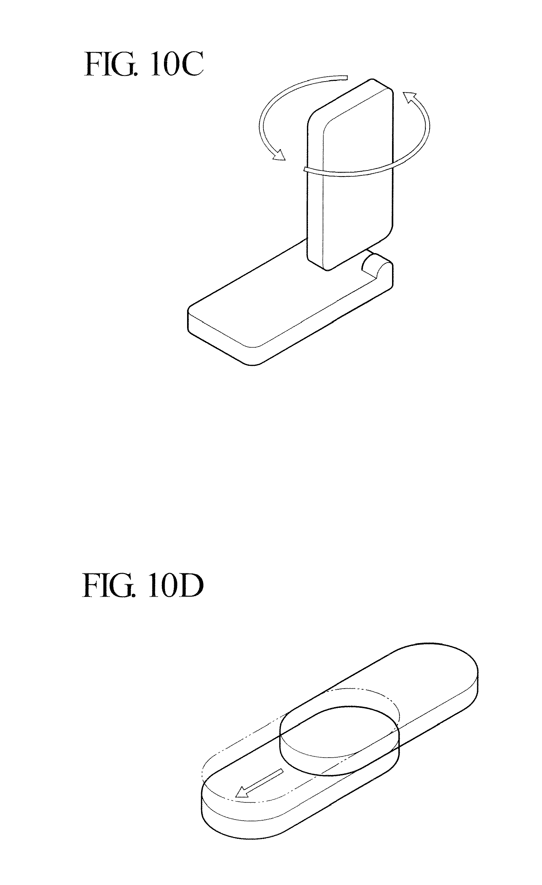

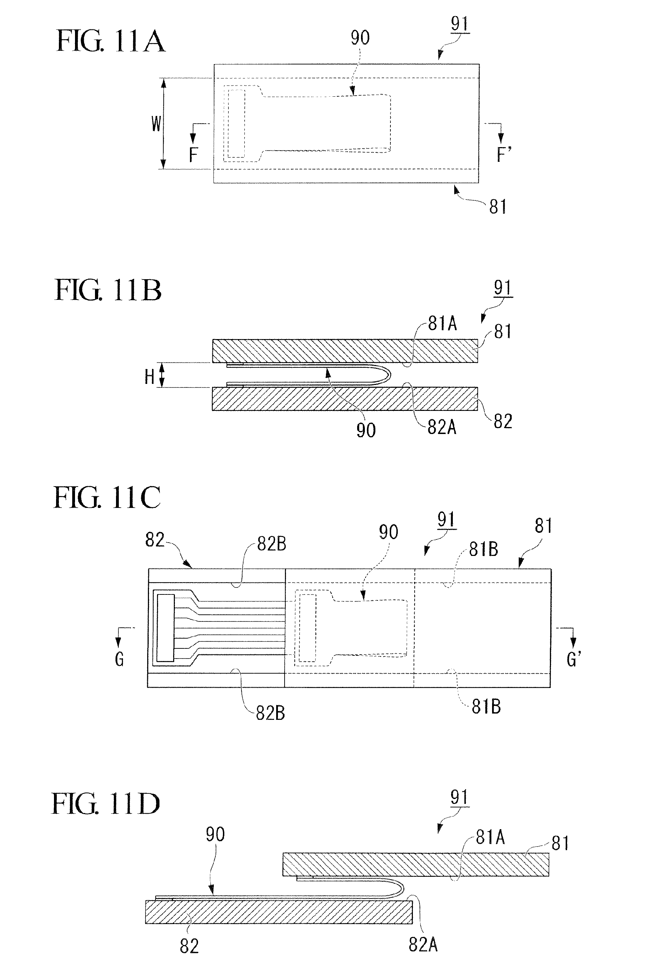

For example, in an electronic apparatus such as a sliding-type mobile phone in which two casings slide with each other as shown in FIG. 10D, a wiring formed of the FPC is normally used. For the wiring applied to the sliding-type structure shown in FIG. 10D, horizontal bending in a very narrow space with a size of 3 mm in a height direction between casings and flexing resistance sufficient to withstand about 100,000 or more repeated cycles of sliding the casings relative to one another are requested. FIGS. 11A to 11D shows a wiring structure 91 of a sliding-type electronic apparatus to which an FPC 90 is applied as a wiring material between casings. The wiring structure 91 has a first casing 81 and a second casing 82 slidably attached to the first casing 81. Circuits of the first and second casings 81 and 82 are electrically connected to each other through the FPC 90. A space with a height H of about 3 mm is provided between the first and second casings 81 and 82, and the FPC 90 is wired in a state of being bent in the space. When the first and second casings 81 and 82 slide with each other, the FPC 90 deforms corresponding to the slide amount to follow the relative movement between the first and second casings 81 and 82. This is because the FPC has a good bending property.

However, in the case of the FPC, each signal line is not shielded since a plurality of signal lines are fixed with a resin film or the like. Accordingly, the FPC is weak with respect to noise. For this reason, the FPC is not suitable for high-speed transmission in a gigahertz band level.

Then, instead of the FPC, a module obtained by making a flattened micro-coaxial cable is used. However, the micro-coaxial cable does not bend well compared with the FPC. Therefore, there were limitations in application of the micro-coaxial cable to an open and close structure called a clamshell type shown in FIG. 10A, a rotation structure called a jackknife type shown in FIG. 10B, and a biaxial structure called a twist type shown in FIG. 10C in which rotation and opening and closing were performed. On the other hand, in the case of the sliding-type electronic apparatus shown in FIG. 10D, the micro-coaxial cable could not be applied as an alternative to the FPC.

In addition, Patent Document 1 discloses a flat cable of a twinax cable obtained by arraying a plurality of two-core parallel coaxial cables (hereinafter, may be referred to as twinax cables) in parallel and fixing the twinax cables with the tape. The twinax cable is mainly used for differential transmission and is excellent in high-speed transmission and antinoise characteristic.

However, the flat cable of the twinax cable disclosed in Patent Document 1 is disadvantageous in that the bending property is not good like that of the flat cable of the micro-coaxial cable described above. In particular, since the twinax cable has a structure in which an outer jacket is further covered on an insulator that covers a pair of conductors, the bending property of the twinax cable is worse than that of the coaxial cable. Accordingly, it is difficult to apply the flat cable of the twinax cable disclosed in Patent Document 1 to the sliding-type electronic apparatus.

For this reason, a wiring structure excellent in high-speed transmission and antinoise characteristics has been requested particularly in an electronic apparatus which has two casings that freely slide relative to each other.
[Patent Document 1] Japanese Unexamined Patent Application, First Publication No.2005-285696

### [Disclosure of the Invention]

### [Problems to be Solved by the Invention]

In view of the above situation, it is an object to provide a wiring structure of a sliding-type electronic apparatus, which has excellent bending property and durability and which may be applied for differential transmission, and an electronic apparatus wiring harness suitable for wiring of the sliding-type electronic apparatus.

### [Means for Solving the Problem]

The invention has adopted the followings in order to solve the above problems and achieve the related object.
(1)An exemplary embodiment provides a cable wiring structure of a sliding-type electronic apparatus of the invention is a cable wiring structure of a sliding-type electronic apparatus in which a plurality of casings with circuits are attached to be movable relatively to each other and the circuits within the casings are electrically connected to each other by an electronic apparatus wiring harness. The electronic apparatus wiring harness has a cable laminated portion in which a plurality of micro two-core parallel coaxial cables are laminated and the cable laminated portion is wired in a U shape on slide surfaces of the casings.

(2)The cable laminated portion may include a plurality of first flat cables, each of the first flat cables including two or more micro two-core parallel coaxial cables disposed in parallel and a sheath covering the micro two-core parallel coaxial cables.

(3)The cable laminated portion may also include a plurality of second flat cables, each of the second flat cables including a plurality of micro-coaxial cables disposed in parallel and a sheath covering the micro-coaxial cables.

(4) Each of the cable laminated portions may have the same length.

(5) A micro two-core parallel coaxial cable at an one end side may be longest among the plurality of the micro two-core parallel coaxial cables, a micro two-core parallel coaxial cable at the other end may be shortest among the plurality of the micro two-core parallel coaxial cables, and the lengths of the other micro two-core parallel coaxial cables may gradually decrease from the one end side toward the other end side.

(6) Another exemplary embodiment provides an electronic apparatus wiring harness which is a wiring material of the cable wiring structure of the sliding-type electronic apparatus described above.

### [Effects of the Invention]

According to the cable wiring structure of the sliding-type electronic apparatus described in (1), the cable laminated portion may be wired in the U shape on the slide surfaces of the casings. Accordingly, micro two-core parallel coaxial cables can be disposed in a space whose height between casings is 3 mm. As a result, a transmission characteristic and an antinoise characteristic in a high-frequency region can be improved.
In addition, since the bending direction of the micro two-core parallel coaxial cable is a width direction between the casings, a case of becoming equal to or smaller than an allowable bending radius of the micro two-core parallel coaxial cable does not occur even if the casings slide with each other. Accordingly, the cable wiring structure may have a flexing resistance that can withstand 100,000 or more repeated cycles of sliding the casings relative to one another.
In the case of (2), adaptation to a plurality of wirings can be made by making the cables flat.
Furthermore, a plurality of characteristics can be simultaneously satisfied by combination of the micro two-core parallel coaxial cables and other cables.

According to exemplary embodiments, it is possible to provide a wiring structure of the sliding-type electronic apparatus to which the micro two-core parallel coaxial cables or the micro two-core parallel coaxial flat cables are applied. In addition, an electronic apparatus wiring harness suitable for wiring of the sliding-type electronic apparatus can also be provided.

### [Brief Description of the Drawings]

FIG. 1A is a plan view schematically illustrating a wiring structure of a sliding-type electronic apparatus before sliding of an exemplary embodiment.
FIG. 1B is a cross-sectional view taken along the line A-A' of FIG. 1A.
FIG. 1C is a plan view schematically illustrating a wiring structure of a sliding-type electronic apparatus after sliding of an exemplary embodiment.
FIG. 1D is a cross-sectional view taken along the line B-B' of FIG. 1C.
FIG. 1E is a side view schematically illustrating a wiring structure of a sliding-type electronic apparatus before sliding of an exemplary embodiment.
FIG. 2A is a plan view schematically illustrating an electronic apparatus wiring harness of a first exemplary embodiment.
FIG. 2B is a perspective view schematically illustrating the electronic apparatus wiring harness of the first exemplary embodiment.
FIG. 2C is a cross-sectional view taken along the line C-C' of FIG. 2A.
FIG. 3A is an enlarged view illustrating a connector portion of an electronic apparatus wiring harness of an exemplary embodiment.
FIG. 3B is an enlarged view illustrating a connector portion of an electronic apparatus wiring harness of an exemplary embodiment.
FIG. 3C is an enlarged view illustrating a connector portion of an electronic apparatus wiring harness of an exemplary embodiment.
FIG. 4 is a plan view schematically illustrating an electronic apparatus wiring harness formed by cables with the same length.
FIG. 5A is a plan view schematically illustrating an exemplary electronic apparatus wiring harness to be connected to a sliding-type electronic apparatus formed by cables with the same length.
FIG. 5B is a plan view schematically illustrating an exemplary electronic apparatus wiring harness to be connected to a sliding-type electronic apparatus formed by cables with the same length.
FIG. 5C is a plan view schematically illustrating an exemplary electronic apparatus wiring harness to be connected to a sliding-type electronic apparatus formed by cables with the same length.
FIG. 6 is a plan view schematically illustrating an electronic apparatus wiring harness formed by cables with different lengths.
FIG. 7A is a plan view schematically illustrating an exemplary electronic apparatus wiring harness to be connected to a sliding-type electronic apparatus formed by cables with different lengths.
FIG. 7B is a plan view schematically illustrating an exemplary electronic apparatus wiring harness to be connected to a sliding-type electronic apparatus formed by cables with different lengths.
FIG. 7C is a plan view schematically illustrating an exemplary electronic apparatus wiring harness to be connected to a sliding-type electronic apparatus formed by cables with different lengths.
FIG. 7D is a plan view schematically illustrating an exemplary electronic apparatus wiring harness to be connected to a sliding-type electronic apparatus formed by cables with different lengths.
FIG. 8A is a plan view schematically illustrating an electronic apparatus wiring harness of a second exemplary embodiment.
FIG. 8B is a perspective view schematically illustrating the electronic apparatus wiring harness of the second exemplary embodiment.
FIG. 8C is a cross-sectional view taken along the line D-D' of FIG. 8A.
FIG. 9A is a plan view schematically illustrating an electronic apparatus wiring harness of a third exemplary embodiment.
FIG. 9B is a perspective view schematically illustrating the electronic apparatus wiring harness of the third exemplary embodiment.
FIG. 9C is a cross-sectional view taken along the line E-E' of FIG. 9A.
FIG. 10A is a view illustrating a casing movement mode of a mobile phone as an exemplary electronic apparatus.
FIG. 10B is a view illustrating a casing movement mode of a mobile phone as an exemplary electronic apparatus.
FIG. 10C is a view illustrating a casing movement mode of a mobile phone as an exemplary electronic apparatus.
FIG. 10D is a view illustrating a casing movement mode of a mobile phone as an exemplary electronic apparatus.
FIG. 11A is a view illustrating a wiring structure of a sliding-type electronic apparatus that uses an FPC as a material for wiring between casings.
FIG. 11B is a cross-sectional view taken along the line F-F' of FIG. 11A.
FIG. 11C is a plan view schematically illustrating a wiring structure of a sliding-type electronic apparatus, which uses an FPC as a material for wiring between casings, after sliding.
FIG. 11D is a cross-sectional view taken along the line G-G' of FIG. 11C.

### [Description of Reference Numerals and Signs]

10: micro two-core parallel coaxial cable
11: core electric wire
20: micro two-core parallel coaxial flat cable
31, 32, 33: electronic apparatus wiring harness
41, 42, 43: cable portion
41A, 42A, 43A: laminated portion (cable laminated portion)
51, 52, 53: connector
60: micro coaxial flat cable
61: micro-coaxial cable
71, 72, 73: wiring structure of sliding-type electronic apparatus
81, 82: casing
81A, 82A: slide surface
83: harness receiving portion
H: height of harness receiving portion
W: width of harness receiving portion

### [Best Mode for Carrying Out the Invention]

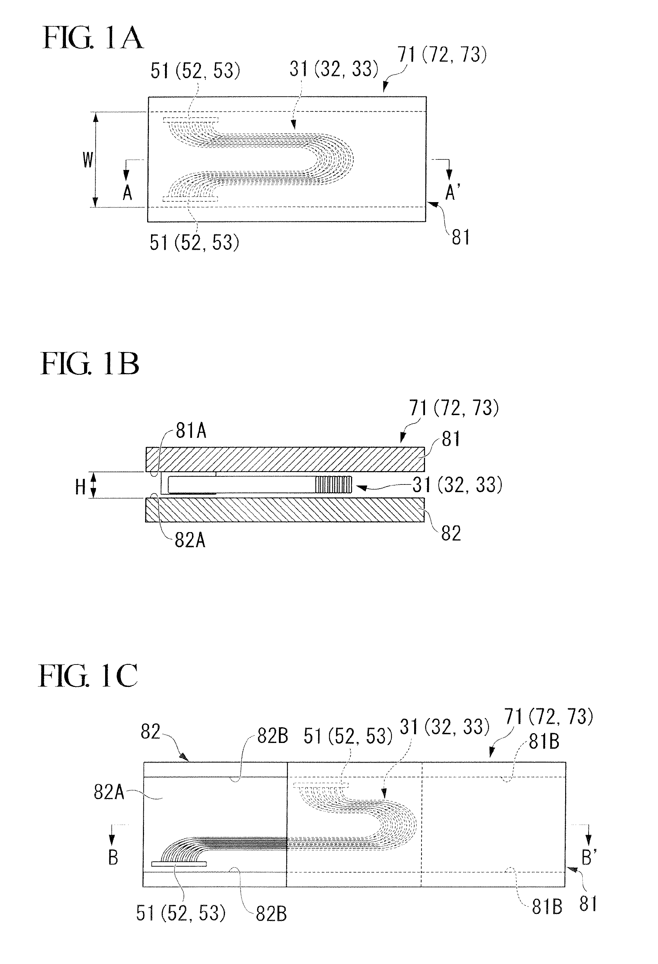

Hereinafter, exemplary embodiments will be described with reference to the accompanying drawings. FIGS. 1A to 9C are views illustrating the configurations of the exemplary embodiments. The size, thickness, or dimension of each member shown in the drawings may be different from those of actual electronic apparatus wiring harness and wiring structure of a sliding-type electronic apparatus.

### First exemplary embodiment

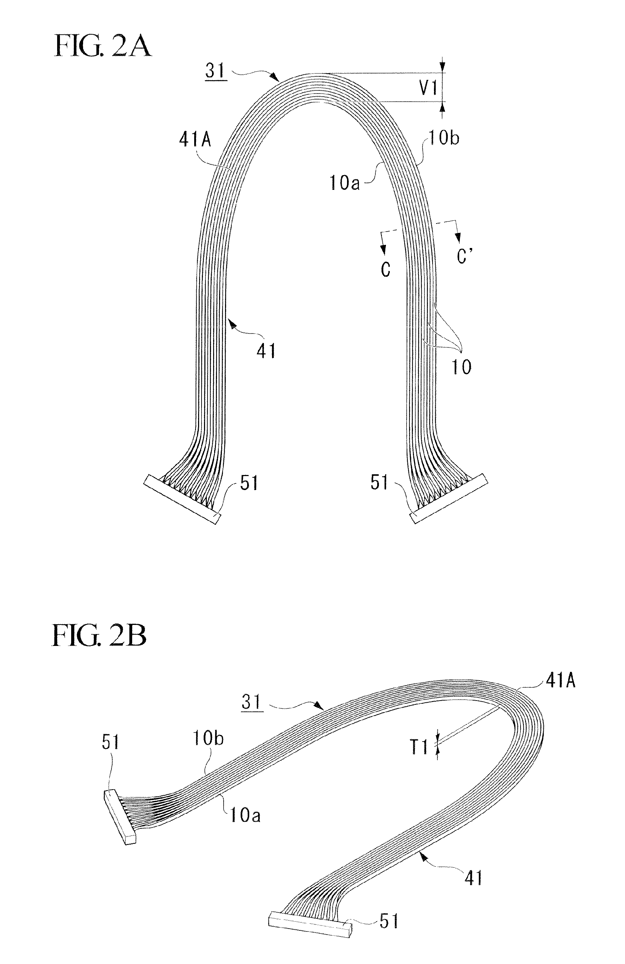

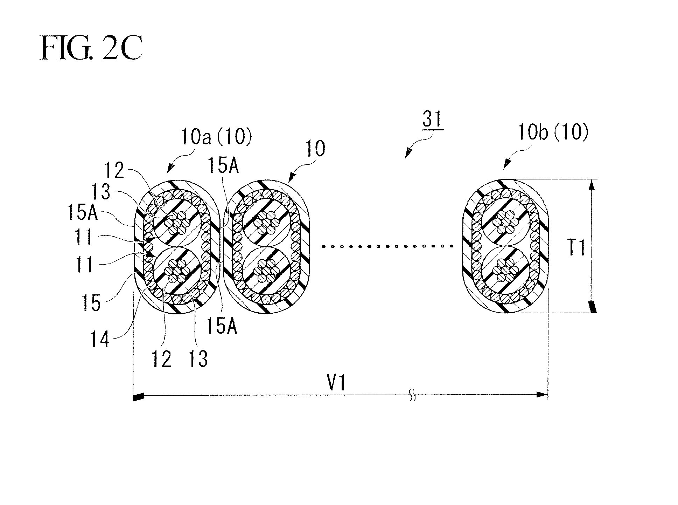

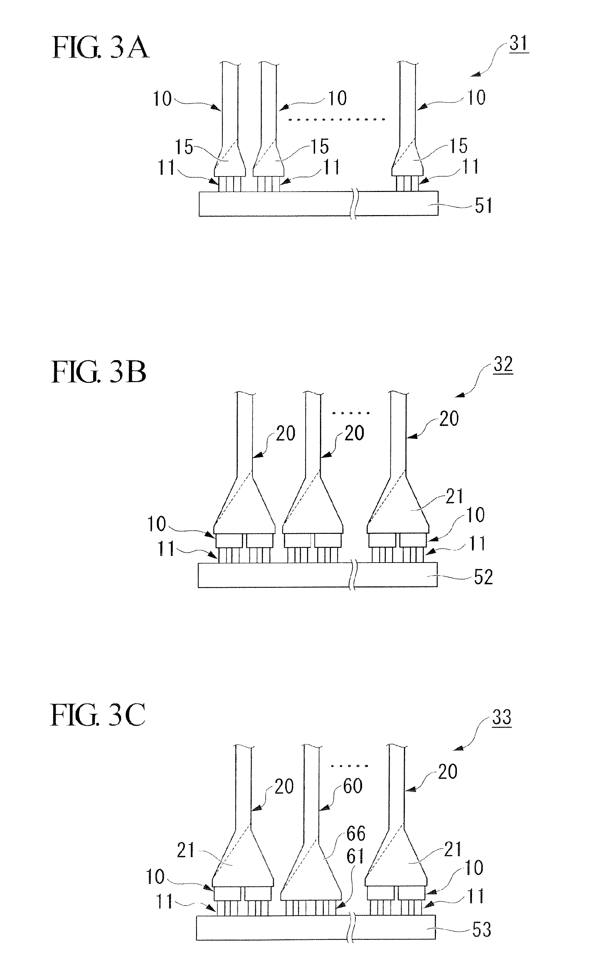

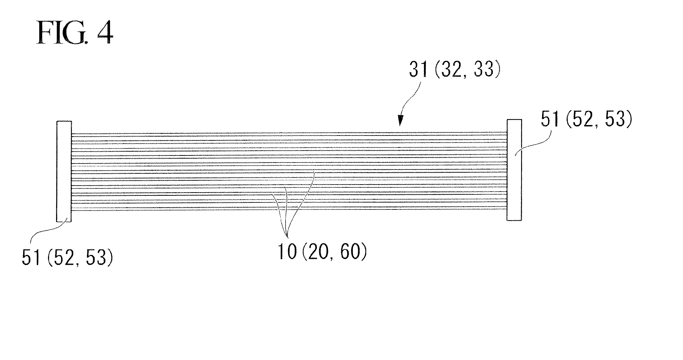

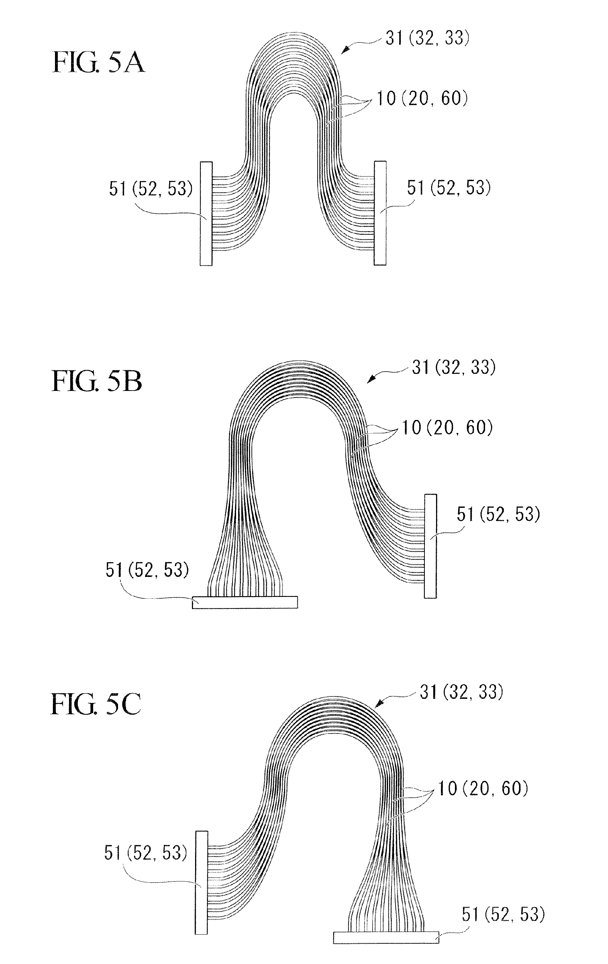

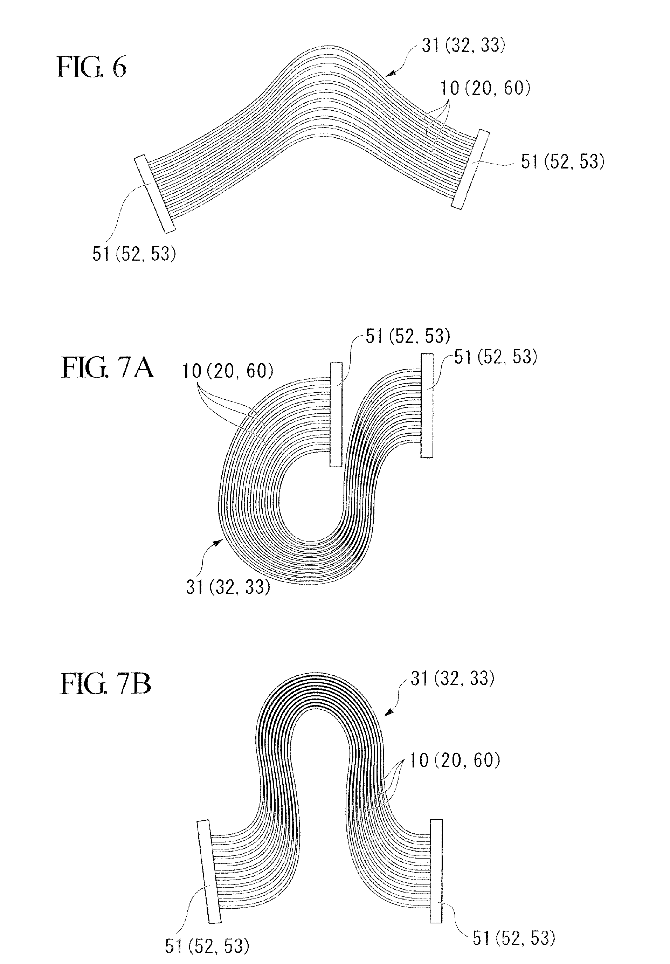

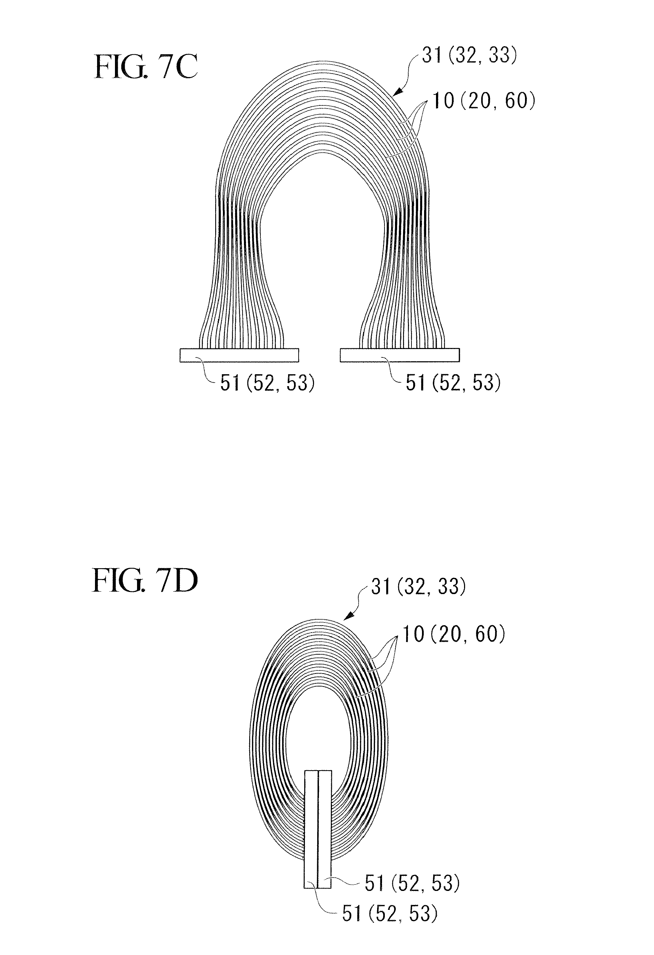

FIGS. 1A to 1E are plan and cross-sectional views illustrating the wiring structure of a sliding-type electronic apparatus of a first embodiment to which the invention is applied. FIGS. 2A to 2C are views illustrating an electronic apparatus wiring harness of the present embodiment. FIG. 2A is a plan view, FIG. 2B is a perspective view, and FIG. 2C is a cross-sectional view taken along the line C-C' of FIG. 2A. FIG. 3A is an enlarged view illustrating a connector portion of the electronic apparatus wiring harness of the present embodiment. FIG. 4 is a plan view schematically illustrating an electronic apparatus wiring harness formed by cables with the same length. FIGS. 5A to 5C are plan views schematically illustrating how the electronic apparatus wiring harness formed by cables with the same length is connected to a sliding-type electronic apparatus. FIG. 6 is a plan view schematically illustrating an electronic apparatus wiring harness formed by cables with different lengths. FIGS. 7A to 7D are plan views schematically illustrating how the electronic apparatus wiring harness formed by cables with different lengths is connected to a sliding-type electronic apparatus.

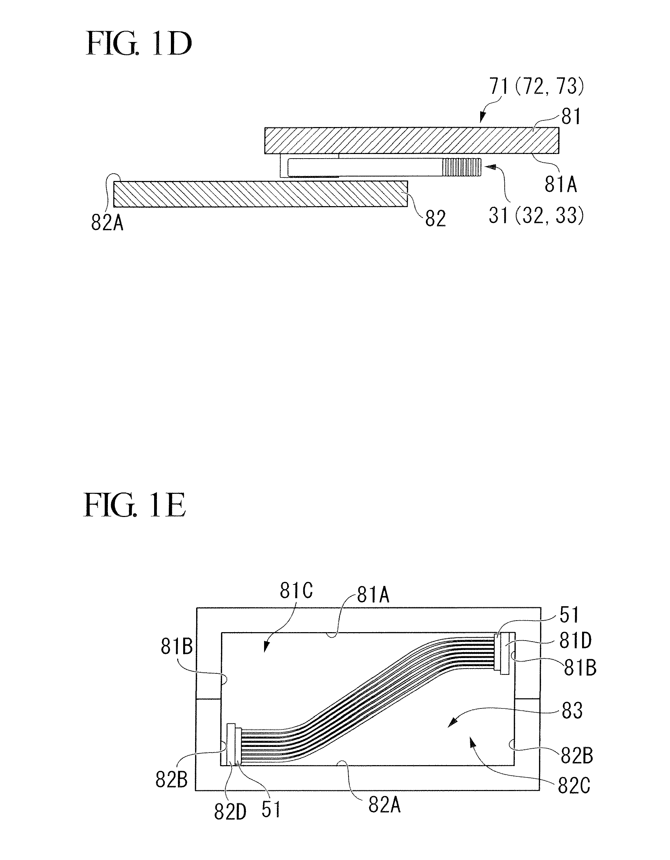

As shown in FIGS. 1A to 1E, a wiring structure 71 of a sliding-type electronic apparatus of the present embodiment includes a pair of casings 81 and 82 with circuits disposed therein (not shown) and an electronic apparatus wiring harness 31 (hereinafter, referred to as a harness 31). The two casings 81 and 82 are slidably attached to each other. The casings 81 and 82 are provided with connector connecting portions 81D and 82D (shown in FIG. 1E) which are input and output portions of the circuits, respectively. Connectors 51 are attached to each of both ends of the harness 31. One connector 51 of the harness 31 is connected to the connector connecting portion 82D of the casing 82, and the other connector 51 is connected to the connector connecting portion 81D of the casing 81. Thus, the circuit portions of the two casings 81 and 82 are electrically connected to each other through the harness 31. In addition, the harness 31 is housed in a state of being bent in a U shape on or between slide surfaces 81A and 82A in a space for electronic apparatus wiring provided between the casings 81 and 82. Hereinafter, exemplary configurations will be described in detail.

The casings 81 and 82 are attached slidably along the longitudinal directions of the casings 81 and 82. Accordingly, a change from a first state in which the casings 81 and 82 completely overlap each other as shown in FIG. 1A, e.g., a closed position, to a second state in which the casings 81 and 82 slide relative to each other such that only a portion of the casings 81 and 82 overlap as shown in FIG. 1C, e.g., an open position, can be made, for example.
In the casing 81, one receiving portion 81C is defined by a pair of sidewall portions 81B and the slide surface 81A disposed between the sidewall portions 81B, and is formed on a side facing the casing 82. Similarly, in the casing 82, the other receiving portion 82C is defined by a pair of sidewall portions 82B and the slide surface 82A disposed between the sidewall portions 82B, and is formed on a side facing the casing 81. The casings 81 and 82 overlap each other such that the slide surfaces 81A and 82A face each other. The one receiving portion 81C and the other receiving portion 82C are united by making the casings 81 and 82 overlap each other, thereby forming a harness receiving portion 83. The height H of the harness receiving portion 83 is about 3 mm, for example. In addition, the width W of the harness receiving portion 83 is about several tens of millimeters, for example.
The connector connecting portions 81D and 82D connected to the harness 31 are provided on the slide surfaces 81A and 82A of the casings 81 and 82, respectively. The connector connecting portions 81D and 82D are provided at the opposite positions when the casings 81 and 82 completely overlap each other, as shown in FIG. 1A. The connector connecting portions 81D and 82D serve as input and output terminals of circuits (not shown) housed inside the casings 81 and 82.

The harness 31 includes a cable portion 41, which can be freely bent, and a pair of connectors 51 respectively attached to the ends of the cable portion 41. The harness 31 is housed in the harness receiving portion 83 and the connectors 51 are connected to the connector connecting portions 81D and 82D of the casings 81 and 82, respectively. Thus, in the wiring structure 71 of the present exemplary embodiment, the circuit portions of the casings 81 and 82 are electrically connected to each other through the harness 31.
As shown in FIGS. 1A to 1E, the harness 31 is housed in the harness receiving portion 83 in a state where the cable portion 41 is bent in an approximate U shape in plan view, i.e., when viewed from a plane along which the casings 81, 82 slide relative to one another. When the casings 81 and 82 slide relative to each other from the closed position to the open position, the connector connecting portions 81D and 82D move in a direction away from each other along the sliding direction. In this case, the cable portion 41 deforms simultaneously to follow the movements of the connector connecting portions 81D and 82D.

As shown in FIGS. 2A and 2B, the harness 31 includes a plurality of micro two-core parallel coaxial cables (micro twinax cables) 10, which form the cable portion 41, and the pair of connectors 51.

As shown in FIG. 2C, a micro twinax cable 10 includes: two core electric wires 11, wherein each wire includes an insulator 13 provided around a central group of conductors 12 and is almost circular in cross-sectional view; an outer conductor 14 that covers the outer periphery of the two core electric wires 11; and an outer jacket 15 that covers the outside of the outer conductor 14. The cross-sectional shape of the jacket 15 becomes a racetrack shape by covering the two circular core electric wires 11 together. An outer surface 15A of a pair of straight line portions of the jacket 15 is an almost flat surface. The flat outer surface 15A of the micro twinax cables 10 are laminated so as to be adjacent to each other. As a result, a laminated portion (cable laminated portion) 41A is formed. Thus, in the cable portion 41, the two core electric wires 11 that form each micro twinax cable 10 are arrayed in two rows along the lamination direction i.e., a direction along the sliding plane and substantially perpendicular to the longitudinal direction of the wires 11.

The cable portion 41 is bent in an almost circular arc shape in the approximate middle along the longitudinal direction thereof, as shown in FIGS. 1A to 1E and 2A to 2C. In this case, the cable portion 41 is bent such that a twinax cable 10a at one end in the lamination direction, among the plurality of laminated micro twinax cables 10, is on the innermost peripheral side of a circular arc and a twinax cable 10b at the other end in the lamination direction is on the outermost peripheral side of the circular arc. The cable portion 41 bent in the circular arc shape as described above is housed in the harness receiving portion 83. The bending radius of each micro twinax cable 10 is largest at the twinax cable 10b on the outermost peripheral side of the circular arc and smallest at the micro twinax cable 10a on the innermost peripheral side of the circular arc. The bending radius of the micro twinax cable 10b on the outermost peripheral side of the circular arc may be approximately up to half of a width W of the harness receiving portion 83. The bending radius of the micro twinax cable 10a on the innermost peripheral side of the circular arc is equal to one obtained by subtracting the laminated thickness of a twinax cable from the bending radius of the micro twinax cable 10b on the outermost peripheral side. In any case, the bending radius of the micro twinax cable 10 in a state of being housed between the casings 81 and 82 is determined by the width W of the harness receiving portion 83. The bent shape of the cable portion 41 is not limited to being bent with a fixed radius of curvature, but the radius of curvature may change continuously. In addition, when the casings 81 and 82 slide with each other, the bent shape of the cable portion 41 changes.

Near a connection portion of the cable portion 41 for connection with the connector 51, a distance between the adjacent micro twinax cables 10 is relatively large. In contrast, in the laminated portion 41A, the distance between the adjacent micro twinax cables 10 is relatively small, and the adjacent micro twinax cables 10 are in contact with each other, forming a dense state. The cross-sectional shape of the micro twinax cable 10 is a racetrack shape as described above, and the width of the micro twinax cable 10 in the alignment direction of the pair of core electric wires 11, i.e., in a direction perpendicular to the sliding plane, is larger than that in the lamination direction perpendicular to the alignment direction. For this reason, a laminated micro twinax cable 10 cannot jump over the adjacent cable. As a result, cables near the connection portion for connection with the connector 51 and cables of the laminated portion 41A are aligned in the same sequence. Moreover, since the width in the alignment direction of the core electric wires 11 is larger than that in the lamination direction, the harness 31 has flexibility along the sliding plane, i.e., in a direction perpendicular to the alignment direction. Accordingly, the flexibility is not lowered also in the laminated portion 41A.

The central conductor 12 may be, for example, a tin-plated annealed copper wire of AWG (American Wire Gauge) #36 or less. Alternatively, the central conductor 12 may be a tin-plated annealed copper wire in a range of AWG #40 to #50.
The material of the insulator 13 may be an insulating resin, such as polyethylene or a fluorine resin, for example, a fluorine resin excellent in a high-frequency characteristic, such as PFA (tetrafluoroethylene / perfluoroalkyl vinylether copolymer; melting point of 300 °C).
The outer conductor 14 may be formed by a braid using a copper wire or a spirally wound shield using aluminum lamination, for example.
The jacket 15 may be formed by spiral winding of polyester tape, such as PET, or extrusion molding of fluorine resin, such as PFA or ETFE (ethylene /tetrafluoroethylene copolymer; melting point of 260°C).

In the connection portion between the micro twinax cable 10 and the connector 51, the two core electric wires 11 from which the jacket 15 is removed are exposed as shown in FIG. 3A. The length of the exposed portion of the core electric wires 11 is preferably about 3 mm. By this configuration, each of the core electric wires 11 can move easily, and it becomes easy to match a wiring distance between the core electric wires 11 with a pitch between terminals of the connector 51. In addition, the exposed core electric wires 11 are connected to the connector 51 in a state of being twisted such that the alignment direction of the core electric wires 11 in the connection portions for connection with the connector 51 is orthogonal to the alignment direction of the core electric wires 11 within the micro twinax cable 10 in the laminated portion 41A. In a known sliding-type electronic apparatus, the cable has a bending radius in a range of the height H of the harness receiving portion 83. Whereas, the micro twinax cable 10 can have a bending radius in a range of the width W of the harness receiving portion 83 which is larger than the height H of the harness receiving portion 83 in the present exemplary embodiment. For this reason, the micro twinax cable 10 can have a sufficiently larger bending radius than the allowable bending radius of the conventional arrangement.

In the present exemplary embodiment, the harness 31 may be formed by using the micro twinax cable 10 with the same length, as shown in FIG. 4. In the harness (hereinafter, referred to as an equal-length harness) 31 formed by the micro twinax cable 10 with the same length, the cable portion 41 can be freely bent in the U shape, for example, according to the position and direction of the connector 51. Accordingly, various shapes of the harness 31 shown in FIGS. 5A to 5C can be realized. The micro twinax cables 10 that form the equal-length harness 31 have flexibility without being fixed to each other. Accordingly, the position of the laminated portion 41A in the cable portion 41 can move according to a bending state of the cable portion 41.

In the harness 31, the configuration of the micro twinax cable may be suitably changed according to the position and direction of the connector 51. That is, as shown in FIG. 6, the micro twinax cables 10 with different lengths may be applied instead of the micro twinax cables 10 with the same length. The harness (hereinafter, referred to as an unequal-length harness) 31 formed by the micro twinax cable 10 with different lengths is configured such that the length of an micro twinax cable connected to one end of the pair of connectors 51 is different from that of a cable connected to the other end, and the cable length changes sequentially from one end toward the other end. In the harness 31 with different lengths, the cable portion 41 can be freely bent in the U shape, for example, according to the position and direction of the connector 51. Accordingly, various shapes of the harness 31 shown in FIGS. 7A to 7D can be realized.
Thus, the harness 31 may be freely selected to have an equal-length or an unequal-length harness 31 according to the positions and directions of the connector connecting portions 81D and 82D and a bent state of the cable portion when the harness 31 is connected to the sliding-type electronic apparatus.

Next, a sliding operation of the wiring structure 71 of the sliding-type electronic apparatus of the present exemplary embodiment will be described.
FIGS. 1A and 1B show a state where casings are closed in the wiring structure of the sliding-type electronic apparatus of the present embodiment. FIG. 1A is a plan view, and FIG. 1B is a cross-sectional view taken along the line A-A' of FIG. 1A. FIGS. 1C and 1D show a state where the casings are made to slide. FIG. 1C is a plan view, and FIG. 1D is a cross-sectional view taken along the line B-B' of FIG. 1C.

Referring to FIGS. 1A-1D, when a force is applied along the longitudinal direction of the casings 81 and 82 in one direction, the casings 81 and 82 slide relative to each other away from each other. As a result, the wiring structure 71 of the sliding-type electronic apparatus deforms to a state where parts of the casings 81 and 82 overlap each other as shown in FIG. 1C. On the other hand, in order to return to the original state from the slid open state, the force is applied along the longitudinal direction in the opposite direction, the casings 81 and 82 move closes to each other along the longitudinal direction. As a result, the casing 81 and 82 slide relative to each other to return to the original closed state.

In the sliding operation of the wiring structure 71 of the sliding-type electronic apparatus, when the casings 81 and 82 slide relative to each other, the harness 31 moves between a first state in which the connector connecting portions 81D and 82D are away from each other along the longitudinal direction and a second state in which the connector connecting portions 81D and 82D are close to each other along the longitudinal direction. In this case, the cable portion 41 deforms as the casings slide to follow the movements of the connector connecting portions 81D and 82D.

As described above, the wiring structure of the sliding-type electronic apparatus to which the micro twinax cable 10 is applied can be provided even if the height H of the harness receiving portion 83 is 3 mm. Therefore, since micro twinax cables can be mounted in the wiring structure 71 of the sliding-type electronic apparatus of the present exemplary embodiment, an antinoise characteristic and a transmission characteristic in a high frequency region can be improved compared with a case where a known FPC is used as a material for wiring between casings.
Moreover, according to the electronic apparatus wiring harness 31 of the present exemplary embodiment, an electronic apparatus wiring harness suitable for wiring of the sliding-type electronic apparatus can be provided.
The harness 31 of the present exemplary embodiment can be housed in the harness receiving portion with the height H of 3 mm while maintaining the alignment sequence of the micro twinax cables 10.
Furthermore, according to the harness 31 of the present exemplary embodiment, the alignment direction of the core electric wires 11 near the connector 51 and the alignment direction in the micro twinax cable laminated portion may be rotated relative to one another by 90°. Accordingly, it is not necessary to limit a bending radius in a range of 3 mm in the direction of the height H of the harness receiving portion 83, unlike the case where a known FPC is used as a material for wiring between casings. In the present exemplary embodiment, for example, a large radius of curvature of about 5 mm or more may be taken as an allowable bending radius in the direction of the width W of the harness receiving portion 83. As a result, of the requirement that the harness 31 have a flexing resistance sufficient to withstand 100,000 or more repeated cycles of the casings sliding relative to one another, as is desired for a mobile phone, can be satisfied.

### Second exemplary embodiment

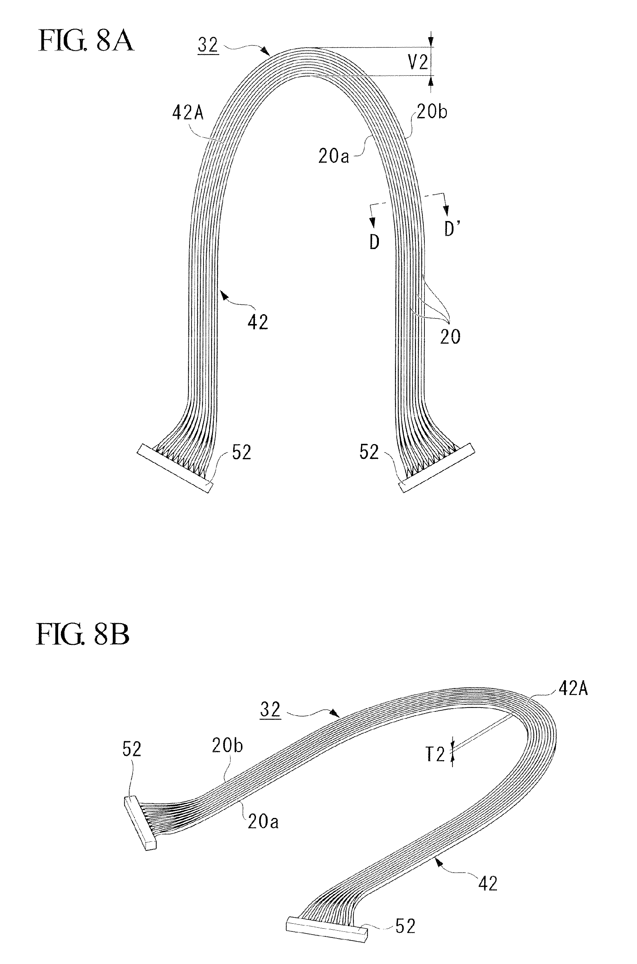

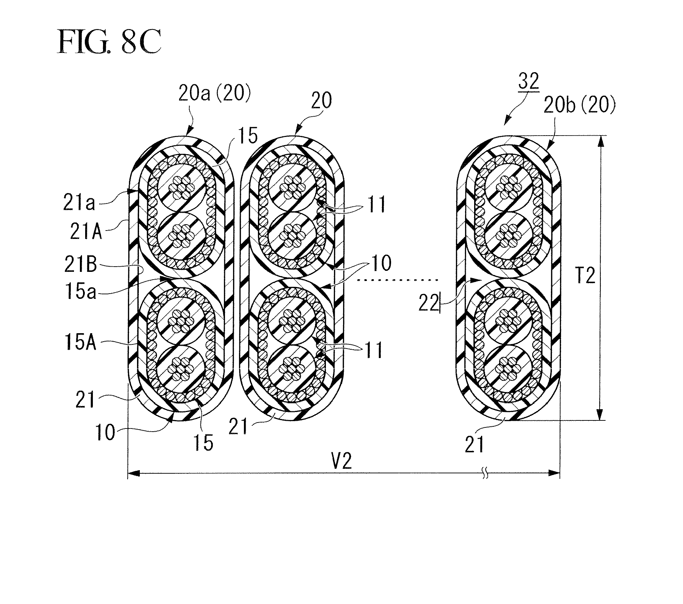

FIGS. 1A to 1E are plan and cross-sectional views illustrating the wiring structure of a sliding-type electronic apparatus of a second embodiment to which the invention is applied. FIGS. 8A to 8C are views illustrating an electronic apparatus wiring harness of the present embodiment. FIG. 8A is a plan view, FIG. 8B is a perspective view, and FIG. 8C is a cross-sectional view taken along the line D-D' of FIG. 8A. FIG. 3B is an enlarged view illustrating a connector portion of the electronic apparatus wiring harness of the present embodiment.

As shown in FIGS. 1A to 1E, a wiring structure 72 of a sliding-type electronic apparatus of the present embodiment includes a pair of casings 81 and 82 with circuits disposed therein (not shown) and an electronic apparatus wiring harness 32 (hereinafter, referred to as a harness 32). The two casings 81 and 82 are slidably attached to each other. The casings 81 and 82 are provided with connector connecting portions 81D and 82D (shown in FIG. 1E) serving as input and output portions of the circuits, respectively. A connector 52 is attached to each of both ends of the harness 32. One connector 52 of the harness 32 is connected to the connector connecting portion 82D of the casing 82, and the other connector 52 is connected to the connector connecting portion 81D of the casing 81. Thus, the circuit portions of the two casings 81 and 82 are electrically connected to each other through the harness 32. The harness 32 is housed in a state of being bent in the U shape on slide surfaces 81A and 82A in a space for electronic apparatus wiring provided between the casings 81 and 82.
In the exemplary embodiment of FIGS. 8A-8C, like reference numerals refer to like elements of the other exemplary embodiments. Accordingly, the electronic apparatus wiring harness of the exemplary embodiment of FIGS. 8A-8C will now be described in detail, but an explanation of any like elements will be omitted.

As shown in FIGS. 8A and 8B, the harness 32 is formed by a plurality of flat cables 20 and a pair of connectors 52. In the harness 32, the plurality of flat cables 20 are laminated and the connectors 52 are connected to both ends.

The flat cable 20 is obtained by disposing two micro twinax cables 10, which are the same as in the first embodiment, in parallel in the alignment direction, i.e., perpendicular to the sliding plane, and covering the two micro twinax cables 10 with a sheath 21, as shown in FIG. 8C. In addition, the micro twinax cables 10 are aligned in a direction in which four core electric wires 11 are parallel. In the present embodiment, the number of micro twinax cables 10 is not particularly limited, and several micro twinax cables or several tens of micro twinax cables may be used. The number of micro twinax cables may be arbitrarily selected by the relationship between the height H of the harness receiving portion 83 in which the harness 32 shown in FIGS. 1A to 1E is housed and a width T2 of the flat cable 20 shown in FIGS. 8B and 8C.
Although the configuration using only the micro twinax cable 10 is shown in the present exemplary embodiment, the configuration of the present embodiment is not limited thereto. For example, the flat cable 20 may be formed by combination of the micro twinax cable and an micro-coaxial cable or a cable other than the coaxial cable, such as an electric wire for power supply or an optical cable.

The cross-sectional shape of the sheath 21 is a racetrack shape. Both outer and inner surfaces 21A and 21B of a pair of straight line portions are flat, and the shape of the micro twinax cable 10 is not transferred to the sheath 21. At a contact portion 15a of the micro twinax cables 10 adjacent to each other, the micro twinax cables 10 are in contact with each other, but the outer jackets 15 are not fused with each other.
The sheath 21 prevents the movement of the micro twinax cable 10, such as jumping over the adjacent cable. Moreover, at a contact portion 21a of the sheath 21 and the micro twinax cable 10, the flat cable 10 and the sheath 21 are in contact with each other, but resins are not fused with each other.
In the present exemplary embodiment, a gap 22 exists between the sheath 21 and the micro twinax cable 10 without a resin or the like, which is used to form the sheath 21, filled therebetween. However, a resin or the like that improves the flexibility or bending durability of the flat cable 20 may be filled without being limited to that described above.

A material of the sheath 21 may be, for example, an ultraviolet curable resin or a fluorine resin such as ETFE (melting point of 225°C). The melting point of the fluorine resin is low and the fluorine resin is easily formed thin. Moreover, since the friction resistance between the outer surface 21A and the inner surface 21B of the sheath 21 is small, the fluorine resin is preferable in that it does not lower the flexibility of the flat cable 20 which will be described later. Table 1 shows a result of comparison of characteristics of PFA and ETFE. As shown in Table 1, ETFE is excellent in the tensile strength and the tensile elongation compared with PFA. Therefore, a flat cable in which thin covering is allowed and which is excellent in a mechanical characteristic compared with PFA can be obtained by using ETFE as a sheath material.
As an exemplary method of covering the sheath 21 the two micro twinax cables 10 may be aligned in parallel and covered collectively by extrusion molding. As a result, it becomes possible to make the micro twinax cable flat, which was difficult in the related art. Although the thickness of the sheath 21 is not particularly limited, the thickness may be in a range of 10 to 50 µm, and more specifically in a range of 20 to 30 µm. The flat cable 20 can have the sufficient flexibility when the thickness of the sheath 21 is in the range of 10 to 50 µm.

**[Table 1]**

| | Unit | ETFE | PFA |
|---|---|---|---|
| Melting point | 15 deg C | 225 | 302 to 310 |
| Tensile strength | MPa | 38 | 29 |
| Tensile elongation (20°C) | % | 420 | 390 |

A difference between a melting point of a resin used for the sheath 21 and a melting point of a resin used for the jacket 15 of the micro twinax cable 10 may be 30°C or more, more specifically 50°C or more. When the melting point difference is 30°C or more, only the sheath 21 can be selectively removed using a carbonic acid laser, for example. Accordingly, only the sheath 21 can be removed and striped without fusing the sheath 21 and the jacket 15 at the contact portion 21a. When ETFE is used for the sheath 21, the sheath 21 can be removed even if an output of the carbonic acid laser is weak, which may improve operational safety and cost reduction.

In the connection portion between the flat cable 20 and the connector 52, the sheath 21 and the jacket 15 are removed and the core electric wire 11 is exposed as shown in FIG. 3B. Accordingly, since each of the core electric wires 11 can move easily, it becomes easy to match a wiring distance between the core electric wires 11 with a pitch between terminals of the connector 51. The width of the core electric wires 11 exposed is preferably about 3 mm. Similar to the first exemplary embodiment, the exposed core electric wires 11 are connected to the connector 52 in a state of being twisted such that the alignment direction of the core electric wires 11 connected to the connector 52 is orthogonal to the alignment direction of the core electric wires 11 within the laminated micro twinax cable 10.

Exposure of the micro twinax cable 10 by removal of the sheath 21 is performed at an end portion of the flat cable 20 for attachment to the connector 52. However, the present exemplary embodiment is not limited thereto. For example, it is also possible to remove an arbitrary portion of the flat cable 20 in an arbitrary range and to strip the sheath 21. In a portion where the sheath 21 is stripped, the micro twinax cable 10 is exposed, such that each cable can move easily. Therefore, the bending characteristic can be improved by applying the exposed portion to a cable hinge, for example.

The harness 32 has a laminated portion 42A in which the plurality of flat cables 20 are laminated such that the alignment directions of the core electric wires 11 are parallel. In the laminated portion 42A, the outer surfaces 21A, which are racetrack shaped with straight line portions, are partially in contact with each other. In addition, the width T2 of the core electric wires 11 in the alignment direction thereof is larger than that in the lamination direction, i.e., in a direction perpendicular to the alignment direction.
For this reason, the laminated flat cable 20 cannot jump over the adjacent cable, and the relationship between the alignment sequence of the flat cables near the connection portion for connection with the connector 52 and the alignment sequence of the flat cables of the laminated portion 42A is maintained. The harness 32 has the flexibility in the direction perpendicular to the alignment direction of the micro twinax cables 10, and the flexibility of the harness 32 is not reduced largely even if the harness 32 is made as a flat cable.

Also for the harness 32 of the present exemplary embodiment, the harness 32 may be formed by the flat cables 20 with the same length shown in FIG. 4 or the flat cables 20 with different lengths shown in FIG. 6, similar to the harness 31 of the first exemplary embodiment. In addition, slide wiring shapes shown in FIGS. 5A to 5C and 7A to 7D may be adopted according to the positions and directions of the connector connecting portions 81D and 82D of the casings 81 and 82.
Comparing the harness 32 of the second exemplary embodiment with the harness 31 of the first exemplary embodiment, T1 < T2 is satisfied for the height of the laminated wirings and V1 > V2 is satisfied for the width of the laminated wirings when the number of micro twinax cables 10 is equal.

Also with the wiring structure 72 of the sliding-type electronic apparatus of the second exemplary embodiment, the same sliding operation as in the first exemplary embodiment is possible as shown in FIGS. 1A to 1E.
Accordingly, in the wiring structure 72 of the sliding-type electronic apparatus of the second exemplary embodiment, the flat cables 20 that form the harness 32 can have bending radii in a range of the width W of the harness receiving portion 83 provided between the casings.

As described above, the same effects as in the first exemplary embodiment can be obtained in the harness 32 and the wiring structure 72 of the sliding-type electronic apparatus of the second exemplary embodiment.
In addition, by using the flat cable 20 of the second exemplary embodiment, a twinax cable can be applied to the sliding-type electronic apparatus even if the number of required wirings of the micro twinax cables that form the harness increases.

By using the fluorine resin for the jacket 15 and the sheath 21 of the micro twinax cable 10, the micro twinax cables 10 can easily slide along the contact portion 15a and the micro twinax cable 10 and the sheath 21 can easily slide along the contact portion 21 a, such that a flat cable 20 excellent in the flexibility can be provided.
In addition, since a resin used for sheath 21 has a lower melting point than a resin used for the jacket 15 of the micro twinax cable 10, only the sheath 21 may be removed using a carbonic acid laser. Since the sheath 21 can be easily removed and stripped, the micro twinax cable 10 can be easily exposed. As a result, the flat cable 20 can be easily connected to the connector 52, twisting of wirings becomes easy, and the bending characteristic of wirings can be improved.

### Third exemplary embodiment

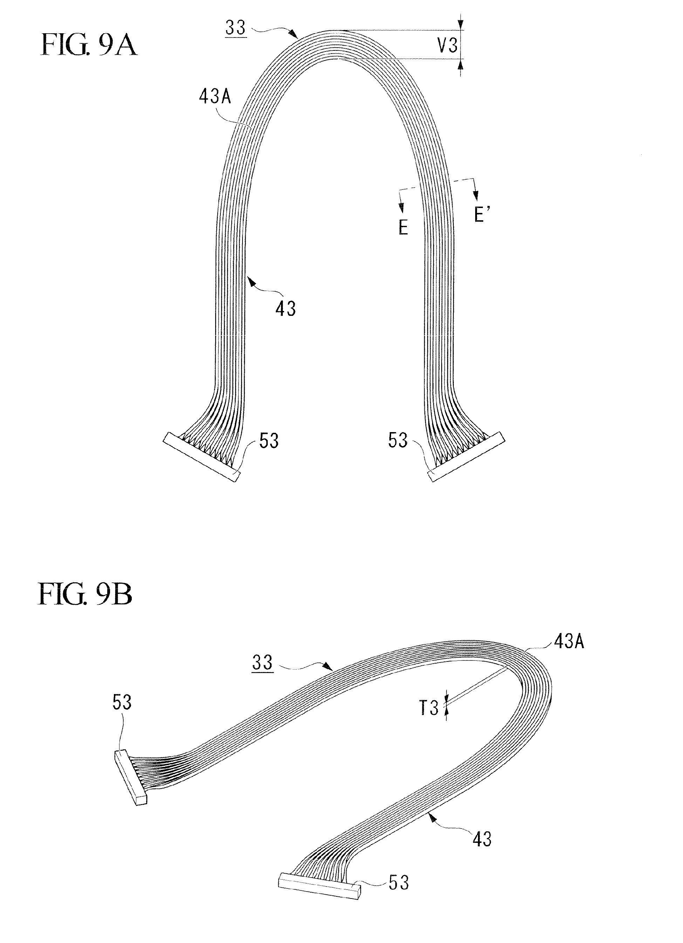

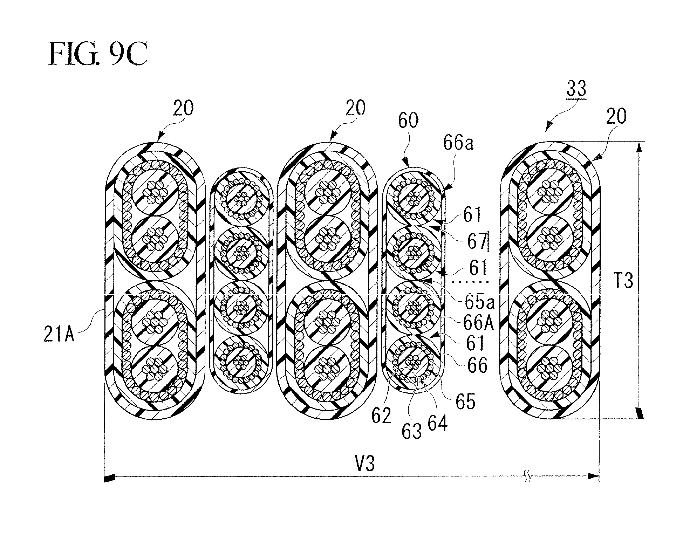

FIGS. 1A to 1E are plan and cross-sectional views illustrating the wiring structure of a sliding-type electronic apparatus of a third embodiment to which the invention is applied. FIGS. 9A to 9C are views illustrating an electronic apparatus wiring harness of the present embodiment. FIG. 9A is a plan view, FIG. 9B is a perspective view, and FIG. 9C is a cross-sectional view taken along the line E-E' of FIG. 9A. FIG. 3C is an enlarged view illustrating a connector portion of the electronic apparatus wiring harness of the present embodiment.

As shown in FIGS. 1A to 1E, a wiring structure 73 of a sliding-type electronic apparatus of the present embodiment includes a pair of casings 81 and 82 with circuits disposed therein (not shown) and an electronic apparatus wiring harness 33 (hereinafter, referred to as a harness 33). The two casings 81 and 82 are slidably attached to each other. The casings 81 and 82 are provided with connector connecting portions 81D and 82D (shown in FIG. 1E) serving as input and output portions of the circuits, respectively. A connector 53 is attached to each of both ends of the harness 32. One connector 53 of the harness 33 is connected to the connector connecting portion 82D of the casing 82, and the other connector 53 is connected to the connector connecting portion 81D of the casing 81. Thus, the circuit portions of the two casings 81 and 82 are electrically connected to each other through the harness 33. The harness 33 is housed in a state of being bent in the U shape on slide surfaces 81A and 82A in a space for electronic apparatus wiring provided between the casings 81 and 82.
In the present exemplary embodiment of FIGS. 9A-9C, like reference numerals refer to like elements of the other exemplary embodiments. Accordingly, the electronic apparatus wiring harness of the exemplary embodiment of FIGS. 9A-9C will now be described in detail, but an explanation of any like elements will be omitted.

As shown in FIGS. 9A and 9B, the harness 33 includes a plurality of flat cables 20, a plurality of micro coaxial flat cables 60, and a pair of connectors 53. In the harness 33, the plurality of flat cables 20 and the plurality of micro coaxial flat cables 60 are laminated, and the connectors 53 are connected to both ends.

The micro coaxial flat cable 60 is obtained by disposing four micro-coaxial cables 61 in parallel and covering the four micro twinax cables 61 with a sheath 66, as shown in FIG. 9C. In the third exemplary embodiment, the number of micro-coaxial cables is not particularly limited, and several micro-coaxial cables or several tens of micro-coaxial cables may be used. The number of micro-coaxial cables may be arbitrarily selected by the relationship with the height H of the harness receiving portion 83.
Although the configuration using only the micro-coaxial cable 61 is shown in the third exemplary embodiment, the configuration is not limited thereto. For example, the micro coaxial flat cable 60 may be formed by combination of the micro-coaxial cable and a cable other than the coaxial cable, such as an electric wire for power supply or an optical cable.

The micro-coaxial cable 61 includes a central conductor 62, an inner insulating layer 63 that surrounds the central conductor 62, an outer conductor 64 that surrounds the inner insulating layer 63, and an outer jacket 65 that surrounds the outer conductor 64. Although the combination of the winding direction of the outer conductor or the type of the micro-coaxial cable 61 used is not particularly limited, a cable in which the size of the central conductor 62 is AWG (American Wire Gauge) #36 or less may be used and a cable in which the size of the central conductor 62 is in a range of AWG #42 to #50 may be used, for example.
The insulating layer 63 is not particularly limited, but may be a fluorine resin such as PFA (tetrafluoroethylene / perfluoroalkyl vinylether copolymer; melting point of 300 °C).

The cross-sectional shape of the sheath 66 is a racetrack shape, as shown in FIG. 9C. Both the outer surface 66A and the inner surface 66B of the pair of straight line portions are flat, and the cable shape of the micro-coaxial cable 61 is not transferred to the sheath 66. At a contact portion 65a of the micro-coaxial cables 61 adjacent to each other, the cables are in contact with each other, but the outer jackets 65 are not fused with each other. The sheath 66 prevents the movement of the micro-coaxial cable 61, such as jumping over the adjacent cable. At a contact portion 66a of the sheath 66 and the micro-coaxial cable 61, the micro-coaxial cable 61 and the sheath 66 are in contact with each other, but resins are not fused with each other.
In the third exemplary embodiment, a gap 67 exists between the sheath 66 and the micro-coaxial cable 61 without a resin or the like, which is used to form the sheath 66, filled therebetween. However, a resin or the like that improves the flexibility or bending durability of the micro coaxial flat cable 60 may be filled without being limited to that described above.

The material, covering method, and thickness of the sheath 66 may be equal to those of the sheath 21 in the second exemplary embodiment. Similarly, a melting point difference between the resin used for the sheath 66 and the resin used for the outer jacket 65 and the sheath removing method may be equal to those in the second exemplary embodiment.

In the connection portion between the flat micro coaxial flat cable 60 and the connector 53, the sheath 66 is removed and the micro-coaxial cable 61 is exposed as shown in FIG. 3C. Accordingly, since each of the micro-coaxial cables 61 can move easily, it becomes easy to match the wiring distance with a pitch between terminals of the connector 53. The width of an exposed portion of the micro-coaxial cable 61 is preferably about 3 mm similar to the second exemplary embodiment. The micro-coaxial cables 61 are connected to the connector 53 in a state of being twisted such that the alignment direction of the micro-coaxial cables 61 connected to the connector 53 and the alignment direction of the micro-coaxial cables 61 in the laminated micro coaxial flat cables 60 become orthogonal directions.

Exposure of the micro-coaxial cable 61 by removal of the sheath 66 is performed at both end portions of the micro coaxial flat cable 60 for attachment to the connector 53. However, the present embodiment is not limited thereto. For example, it is also possible to remove an arbitrary portion of the micro coaxial flat cable 60 in an arbitrary range and to strip the sheath 66. In a portion where the sheath 66 is stripped, the micro-coaxial cable 61 is exposed, such that each cable can move easily. Therefore, the bending characteristic can be improved by applying the exposed portion to a cable hinge, for example.

While the harness 32 of the second exemplary embodiment has the cable portion 42 in which only the flat cables 20 are laminated, the harness 33 of the third exemplary embodiment is different from the harness 32 of the second exemplary embodiment in that a cable portion 43 having an arbitrary number of flat cables 20 and an arbitrary number of micro coaxial flat cables 60 laminated in the arbitrary sequence is provided.
Moreover, in the harness 33, the plurality of flat cables 20 and the plurality of micro coaxial flat cables 60 are laminated such that the alignment direction of the core electric wires 11 in the flat cable 20 and the micro-coaxial cables 61 in the micro coaxial flat cable 60 are parallel. In a laminated portion 43A, the outer surface 21A and the outer surface 66A which are straight line portions with racetrack shapes are partially in contact with each other.
The laminated flat cable 20 and the micro coaxial flat cable 60 cannot jump over the adjacent cables, and the relationship between the alignment sequence of the cables near the connector 53 and the alignment sequence of the cables of the laminated portion 43A is maintained. The harness 33 has the flexibility in a direction perpendicular to the alignment direction of the micro twinax cables 10 or the micro-coaxial cables 61, and the flexibility of the harness 33 is not reduced largely even if the harness 33 is made as a flat cable.

Also for the harness 33 of the third exemplary embodiment, the harness 33 may be formed by the flat cables 20 and 60 with the same length shown in FIG. 4 or the flat cables 20 and 60 with different lengths shown in FIG. 6, similar to the harness 32 of the second embodiment. In addition, slide wiring shapes shown in FIGS. 5A to 5C and 7A to 7D may be adopted according to the positions and directions of the connector connecting portions 81D and 82D of the casings.

As shown in FIGS. 1A to 1E, the same sliding operation as in the first and second exemplary embodiments is also possible with the wiring structure 73 of the sliding-type electronic apparatus of the third exemplary embodiment.
Accordingly, in the wiring structure 73 of the sliding-type electronic apparatus of the third exemplary embodiment, the micro coaxial flat cables 60 and the flat cables 20 that form the harness 33 can have bending radii in a space between the casings in a direction of the width W. For this reason, small bending which is less than the allowable bending radius does not occur in the flat cable 10 and the micro coaxial flat cable 60.

As described above, the same effects as in the first and second exemplary embodiments can be obtained in the harness 33 and the wiring structure 73 of the sliding-type electronic apparatus of the third exemplary embodiment.
In addition, various signal characteristics requested to the sliding-type electronic apparatus can be satisfied by using the harness 33 of the third exemplary embodiment.

The technical scope is not limited to the above exemplary embodiments, but various modifications may be made without departing from the scope of the inventive concept.
For example, the micro twinax cable or the micro-coaxial cable may be formed as a flat cable by a resin tape or plain knitting using a resin fiber instead of a resin sheath.
In addition, a flat cable configured to include a cable other than the flat cable using the micro twinax cable or micro-coaxial cable may be further laminated to form the harness.

### Examples

Now, the effects of the exemplary embodiments will be more apparent by examples. The inventive concept is not limited to the following examples, but various modifications may be suitably made without departing from the scope of the inventive concept.

### First example

A flat cable with the structure shown in FIG. 8C was manufactured by using AWG #42 with an external diameter of 0.075 mm as a central conductor of a micro twinax cable, aligning two micro twinax cables in parallel, and performing collective covering with a fluorine resin using an extrusion method. For the size of the flat cable, the width V2 shown in FIG. 8C is 3 mm and the thickness T2 shown in FIG. 8C is 1.2 mm. The size of the flat cable corresponds to space saving.
The harness with the structure shown in FIGS. 8A to 8C was manufactured by connecting the cable having a length of 80 mm between two connection portions (connectors).
The harness was wired in a state where the connectors were spaced from each other by 12.4 mm in a direction perpendicular to the casing sliding direction. The radius of curvature of the cable was 5 mm or more. The cable receiving height of a slide portion was set to 3 mm.
In this state, the casings were slid continuously to bend the cable, and the number of slides until the cable were broken was studied. Slide tests were conducted under the conditions of a sliding distance of 30 mm and a rate of 30 times / minute.
As a result, no cable breakage occurred in the harness according to this exemplary embodiment even when 100,000 or more slides of the casings relative to one another were performed.

### Comparative example

A flat cable was manufactured by aligning forty micro-coaxial cables (AWG #46 with an external diameter of 0.24 mm) in parallel and fixing the forty micro-coaxial cables with the tape, and the flat cable was wired such that a line, which connects connectors, is parallel to the casing sliding direction as shown in FIGS. 8A to 8C. The cable of the harness was bent at the cable receiving height (3 mm) of a slide portion, and the radius of curvature of the cable was 1.5 mm.
In this state, slide tests were conducted under the same conditions as those in the first Example. As a result, the cable in the comparative example was broken at trials of 11254 in average (n = 3).

### [Industrial Applicability]

The cable wiring structure of the sliding-type electronic apparatus and the electronic apparatus wiring harness are applicable not only to mobile phones but also to wiring for all kinds of small electronic apparatuses to which space saving is requested.
Although exemplary embodiments have been described, it will be understood by those skilled in the art that various changes and modifications can be made.

## Claims

1. A cable wiring structure of a sliding-type electronic apparatus in which a plurality of casings having respective circuits are slidably attached to each other the cable wiring structure comprising:
an electronic apparatus wiring harness electrically connected to the circuits of the casings;
wherein the electronic apparatus wiring harness comprises a cable laminated portion in which a plurality of micro two-core parallel coaxial cables are laminated, and the cable laminated portion has a U-shape when viewed from a slide surface of the casings.

2. The cable wiring structure of the sliding-type electronic apparatus according to claim 1,
wherein the cable laminated portion comprises a laminated plurality of first flat cables, each of the first flat cables comprising two or more micro two-core parallel coaxial cables disposed in parallel and a sheath covering the micro two-core parallel coaxial cables.

3. The cable wiring structure of the sliding-type electronic apparatus according to claim 1,
wherein the cable laminated portion further comprises a laminated plurality of second flat cables, each of the second flat cables comprising a plurality of micro-coaxial cables disposed in parallel and a sheath covering the micro-coaxial cables.

4. The cable wiring structure of the sliding-type electronic apparatus according to claim 1,
wherein each of the cable laminated portions have the same length.

5. The cable wiring structure of the sliding-type electronic apparatus according to claim 1,
wherein a micro two-core parallel coaxial cable at a first end among the plurality of the micro two-core parallel coaxial cables is longest, a micro two-core parallel coaxial cable at a second end among the plurality of the micro two-core parallel coaxial cables is shortest, and the lengths of the micro two-core parallel coaxial cables between the first end and the second end gradually decrease from the first end toward the second end.

6. An electronic apparatus wiring harness that is a wiring material of the cable wiring structure of the sliding-type electronic apparatus according to claim 1.
